# EUROPÄISCHE PATENTSCHRIFT

(11) **EP 1 589 050 B1**
(45) Veröffentlichungstag und Bekanntmachung des Hinweises auf die Patenterteilung: **30.04.2008**
(21) Anmeldenummer: 05005201.8
(22) Anmeldetag: 10.03.2005
(51) Int. Cl.: C08F 265/06, C08F 283/10, C08F 283/02, C04B 26/02, C04B 26/06

(54) **Reparaturset**
Repair kit
Kit de réparation

(30) Priorität: 23.04.2004 AT 7002004
(43) Veröffentlichungstag der Anmeldung: 26.10.2005
(73) Patentinhaber: Invicon Chemical Solutions GmbH, 6890 Lustenau (AT)
(72) Erfinder: Zanghellini, Gerhard, 9494 Schaan (LI)
(74) Vertreter: Hofmann, Ralf U.

(56) Entgegenhaltungen:
- EP-A- 0 982 363
- WO-A-98/14486
- AT-B- 241 513
- GB-A- 2 360 039
- US-A- 6 103 800
- US-A1- 2003 008 936
- ANONYMOUS: "natuursteen" INTERNET ARTICLE, [Online] 20. Dezember 2003 (2003-12-20), XP002332311 Gefunden im Internet: URL:web.archive.org/web/20031220153942/htt p://www.beltraco.nl/index.html> [gefunden am 2005-06-15]

## Beschreibung

Die Erfindung betrifft ein Reparaturset zur Reparatur von Beschädigungen in Oberflächen oder an Kanten von Gegenständen aus Naturstein, insbesondere aus Marmor, umfassend ein flüssiges oder pastöses Füllmaterial, welches durch Polymerisation, Polyaddition oder Polykondensation aushärtbar ist.

Natursteine werden beispielsweise für hochwertige Abdeckungen im Bereich Küchenbau, Fassadenbau und Bodenbeläge eingesetzt. U. a. werden Natursteine auch für Kunstobjekte und im Straßenbau verwendet. Speziell in den hochwertigen Einsatzbereichen können Beschädigungen, wie Kratzer, Absplitterungen oder Kantenbrüche, von solchen edlen Natursteinen einen großen Schaden darstellen. Ein Ersatz des beschädigten Natursteins ist hierbei sehr teuer und auch zeitaufwendig. Es ist weiters bereits bekannt, Beschädigungen von Natursteinen zu reparieren. Eine solche Reparatur ist schneller, billiger und kann vor Ort ausgeführt werden. Allerdings kommt es durch die Reparatur zu beträchtlichen Qualitätseinbußen. Insbesondere wird der optische Eindruck bereits direkt nach der Reparatur negativ beeinflusst. Meist sind die herkömmlichen Reparatursysteme farblich nicht besonders gut abgestimmt. Es sind jedoch auch bereits Systeme bekannt geworden, bei denen durch Farbretusche bzw. durch Einfärben des Reparaturmaterials eine bessere Anpassung an das Aussehen des Natursteins erreicht wird. Allerdings ist das Ergebnis insbesondere bei Natursteinen mit einer kristallinen Struktur dennoch häufig unbefriedigend. Dies gilt ganz besonders für weißen Marmor. Es wurde daher auch bereits probiert, gemahlenen Marmor dem Füllstoff beizumengen, wodurch aber ebenfalls keine vorteilhafte Reparatur erreicht werden konnte. So kann dabei beispielsweise die Reparaturstelle nach dem Einfüllen des Reparaturmaterials nicht mehr in geeigneter Weise nachbehandelt werden, beispielsweise nicht mehr poliert werden. GB 2 360 039 A offenbart Reparatursets für Steinmaterialien wie Marmor, enthaltend ein kunstharz, einen Härter, Steingranulat und optional Polyesterpigmente.

Aufgabe der Erfindung ist es, ein Reparaturset der eingangs genannten Art bereitzustellen, mit welchem beschädigte Stellen von Natursteinen, insbesondere Marmor, vorteilhaft repariert werden können, wobei die reparierte Stelle möglichst wenig sichtbar ist. Erfindungsgemäß gelingt dies durch ein Reparaturset mit den Merkmalen des Patentanspruchs 1 bzw. durch ein Verfahren mit den Merkmalen des Patentanspruchs 11.

Dadurch, dass zur Auffüllung der Beschädigung im Naturstein neben dem Füllmaterial auch ein durch Polymerisation, Polyaddition oder Polykondensation ausgehärtetes Granulat verwendet wird, kann eine wesentlich bessere Angleichung der Reparaturstelle an die übrige Natursteinoberfläche erreicht werden. Das Granulat kann hierbei vorteilhafterweise ähnliche mechanische Eigenschaften wie das ausgehärtete Füllmaterial aufweisen. Dies ermöglicht es, dass durch eine mechanische Nachbearbeitung durch Abschleifen oder Abschneiden von überstehendem ausgehärtetem Füllmaterial und Granulat sowie Polieren eine gleichmäßige Oberfläche erreicht wird. Vorzugsweise gehören hierbei das ausgehärtete Füllmaterial und das mindestens eine im Reparaturset enthaltene Granulat zur gleichen Stoffklasse, d. h. zur gleichen Gruppe bzw. Klasse von Polymeren, Polyaddukten oder Polykondensaten.

Das ausgehärtete Füllmaterial und das mindestens eine Granulat enthalten jeweils Polymethacrylat oder Polyacrylat, und zwar mit einem Anteil von jeweils zumindest 10 Gew%, wobei ein Wert von mindestens 40 Gew% besonders bevorzugt ist. Daneben können verschiedene Zuschlagstoffe enthalten sein, beispielsweise Farbzuschlagstoffe oder Füllstoffe, beispielsweise gemahlenes Glas, z. B. Bariumglas.

Das Füllmaterial enthält mehrfunktionelle Methacrylate bzw. Acrylate und das Granulat wird aus einem Ausgangsmaterial gebildet, welches mehrfunktionelle Methacrylate bzw. Acrylate enthält. Dies führt nach der Aushärtung des Füllmaterials bzw. des Ausgangsmaterials des Granulats zu einem vernetzten Polymerisat. Vorteile sind eine höhere thermische Beständigkeit, eine verbesserte Abriebfestigkeit, eine hohe Lösungsmittelbeständigkeit und eine höhere Härte.

Weitere Vorteile und Einzelheiten der Erfindung werden im Folgenden anhand der beiliegenden Zeichnung erläutert. In dieser zeigen:
- Fig. 1: einen Querschnitt durch eine Platte aus einem Naturstein mit einer beschädigten Oberfläche;
- Fig. 2: einen Querschnitt entsprechend Fig. 1 nach Einbringung des Füllmaterials in den beschädigten Bereich;
- Fig. 3: einen Querschnitt entsprechend Fig. 2 nach Einbringung des Granulats und
- Fig. 4: einen Querschnitt entsprechend Fig. 3 nach Abschluss der Reparatur.

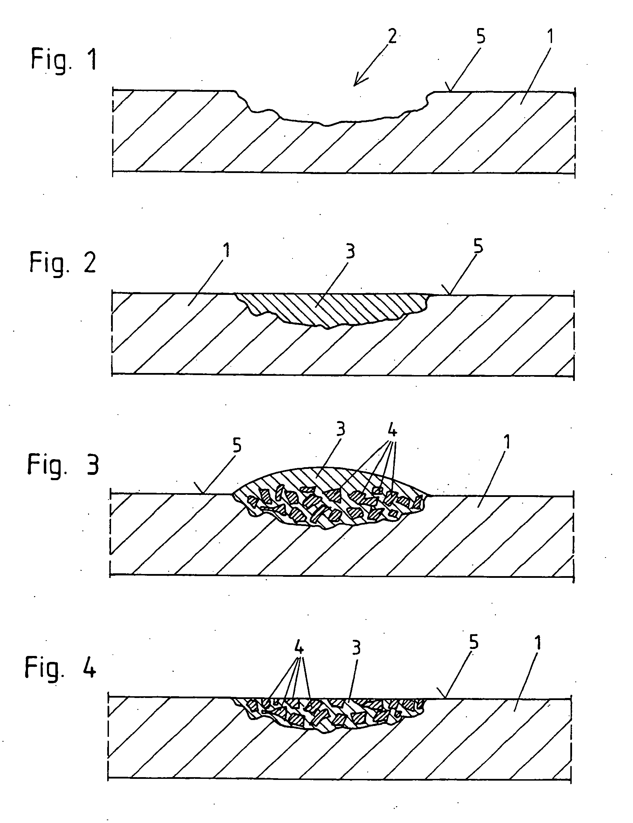

In Fig. 1 ist ein schematischer Schnitt eines plattenförmigen Gegenstandes 1, beispielsweise einer Abdeckplatte oder einer Arbeitsplatte, aus Naturstein mit einer kristallinen Struktur, insbesondere Marmor, dargestellt. In der oberen Oberfläche dieses plattenförmigen Gegenstandes 1, welche beispielsweise eine Arbeitsfläche bildet, ist eine Beschädigung 2 in Form eines Ausbruchs von Material des Natursteins vorhanden. Ebenso können mit einem erfindungsgemäßen Reparaturset Absplitterungen, Spalte oder tiefere Kratzer in Oberflächen repariert werden. Weiters können auch Kantenabbrüche repariert werden.

Ein erfindungsgemäßes Reparaturset umfasst ein flüssiges oder pastöses Füllmaterial 3. Dieses wird zunächst aus einem Vorratsbehälter in den beschädigten Bereich eingefüllt, wie dies schematisch in Fig. 2 dargestellt ist. Vor dem Einfüllen des Füllmaterials 3 in die die Beschädigung 2 bildende unregelmäßige Vertiefung wird der Naturstein 1 im Bereich der Beschädigung 2 mit einem Lösungsmittel gereinigt. Gegebenenfalls kann vor dem Einbringen des Füllmaterials 3 weiters ein Haftvermittler aufgetragen werden. Auch kann der beschädigte Bereich 2 vor der Reinigung mit einem rotierenden Instrument aufgeweitet werden, falls dies als günstig für die Reparatur erscheint. Haftvermittler sind in unterschiedlichen Formen bekannt, beispielsweise können bei Füllmaterialien auf Methacrylat-Basis aktivierte Hydroxy-Silane eingesetzt werden, beispielsweise Methacryloylalkyl-Silane.

Nach dem Einbringen des Füllmaterials 3 in die Beschädigung 2 wird Granulat 4 in das Füllmaterial 3 eingedrückt. Die die Beschädigung 2 bildende Vertiefung ist nunmehr etwas überfüllt, wie dies aus Fig. 3 ersichtlich ist. Das Füllmaterial 3 wird nunmehr in diesem Ausführungsbeispiel durch Polymerisation ausgehärtet. Hierbei ist eine Aushärtung durch Lichteinwirkung bevorzugt (Photopolymerisation).

In der Folge wird das überflüssige, die Oberfläche 5 überragende Material durch einen Schleif- oder Schneidvorgang entfernt. Beispielsweise kann hierzu ein herkömmlicher Lackhobel eingesetzt werden. Falls sich bei dieser Entfernung leichte Porositäten im Reparaturbereich ergeben, so können diese mit dem Füllmaterial 3 nochmals aufgefüllt werden, worauf das Füllmaterial wiederum durch Polymerisation gehärtet wird und die Oberfläche nochmals abgehobelt wird.

In der Folge wird die Oberfläche im Bereich der Reparaturstelle poliert. Der Schaden ist somit behoben.

Das Füllmaterial 3 ist wie erwähnt in diesem Ausführungsbeispiel durch Polymerisation aushärtbar und enthält mindestens ein Monomer, wobei der Monomeranteil vorzugsweise mindestens 40 Gew% des Füllmaterials ausmacht. In einer bevorzugten Ausführungsform der Erfindung wird der Monomeranteil von mindestens einem Methacrylat gebildet. Weiters enthält das Füllmaterial einen Initiator zur Auslösung der Polymerisation, beispielsweise Kampferchinon und/oder Benzoinderivate für eine Photopolymerisation oder Peroxide oder Pinakole für eine Aushärtung unter Einfluss einer erhöhten Temperatur. Farbstoffe und/oder weitere Zusatzstoffe können ebenfalls enthalten sein. Durch die Aushärtung bildet sich somit ein Polymerisat auf Polymethacrylatbasis.

Das Granulat 4 besteht aus einem in diesem Ausführungsbeispiel durch Polymerisation ausgehärteten Material, enthält somit ein Polymer, vorzugsweise mit einem Anteil von zumindest 40 Gew%. In der bevorzugten Ausführungsform der Erfindung, in welcher das Füllmaterial mindestens ein Methacrylat enthält, enthält das Granulat 4 mindestens ein Polymethacrylat.

Anstelle von Methacrylaten bzw. Polymethacrylaten sind auch Acrylate bzw. Polyacrylate einsetzbar.

In bevorzugten Ausführungsformen der Erfindung gehört das Granulat 4 somit zur gleichen Stoffgruppe, d. h. zur gleichen Gruppe (Klasse) von Polymeren, Polyaddukten oder Polykondensaten wie das Füllmaterial 3 nach seiner Aushärtung. Auf diese Weise wird nach der Aushärtung des in die Reparaturstelle eingebrachten Füllmaterials 3 mit dem darin enthaltenden Granulat 4 eine vorteilhafte Nachbearbeitung ermöglicht, bei der schlussendlich eine polierte ebene Oberfläche erhalten wird, welche bündig zur an die Reparaturstelle anschließenden Oberfläche 5 des reparierten Gegenstandes 1 ist.

Das Granulat 4 wird durch Zerkleinerung von gehärtetem Material gebildet. Hierbei wird eine Kunststoffformulierung basierend auf derselben Stoffklasse wie das Reparaturmaterial hergestellt. Dieses flüssige oder pastöse Gemisch wird ausgehärtet (polymerisiert, polyaddiert oder polykondensiert), insbesondere unter Anwendung von Hitze oder Licht, wobei der enthaltene Initiator aktiviert wird. Eine weitere Möglichkeit der Aushärtung ist die chemische Aushärtung. Es handelt sich dann um ein Zwei-Komponentensystem, z.B. Amin-Peroxid, Co-Hydroperoxid, Amin-Epoxid, Isocyanat-Polyol, usw. Das gehärtete Material wird in der Folge mittels einer Schlag- oder Schneidmühle auf eine gewünschte Korngröße zerkleinert. Durch Wahl der Korngröße können feinkristalline oder grobkristalline Natursteine simuliert werden. Die durchschnittliche Korngröße der Körner des Granulats hängt von der Art der Anwendung ab und beträgt vorteilhafterweise mindestens 0,05 mm und höchsten 5 mm, wobei der Bereich zwischen 0,1 mm und 3 mm besonders bevorzugt ist. Ein erfindungsgemäßes Reparaturset kann auch zwei oder mehrere unterschiedliche Granulate aufweisen, beispielsweise mit unterschiedlichen Korngrößen und/oder Farben und/oder Opazitäten, welche von separaten Vorratsbehältern aufgenommen sind. Beispielsweise kann ein transparentes und ein weißes Granulat in jeweils zwei unterschiedlichen durchschnittlichen Korngrößen, beispielsweise 1 mm und 2 mm, vorhanden sein.

Durch die Variation der Farbe und/oder Transparenz bzw. Opazität des Granulats und/oder des Füllmaterials kann die Anpassung der Reparaturstelle an die Oberfläche 5 des Natursteins optimiert werden. Farbige Granulate können beispielsweise für die Reparatur von Graniten eingesetzt werden.

Je nach gewünschtem Effekt können zwischen dem ausgehärteten Füllmaterial und dem Granulat mehr oder weniger große farbliche und/oder opazitätsmäßige Unterschiede vorhanden sein, um einen geeigneten Kontrast zwischen dem ausgehärteten Füllmaterial und dem Granulat zu erzeugen, sofern ein solcher gewünscht wird.

Das Reparaturset kann verschiedene Füllmaterialien 3 aufweisen, die sich in der Farbe und/oder Transparenz unterscheiden. Beispielsweise kann ein weitgehend glasklares Füllmaterial und ein weißes Füllmaterial (mit einer mehr oder weniger ausgeprägten Transparenz) vorhanden sein, wobei diese Füllmaterialien wiederum in separaten Vorratsbehältern enthalten sind. Daneben können verschiedene Farbstoffe in jeweils separaten Vorratsbehältern vorhanden sein, die dem Füllmaterial zur Anpassung an die Farbe des Natursteins beigemischt werden können (bei der Einbringung in den beschädigten Bereich).

Im Unterschied zur anhand der Figuren 1 bis 4 beschriebenen Reparatur können das Füllmaterial 3 und das Granulat 4 auch bereits vor der Einbringung in den beschädigten Bereich gemischt werden.

In Abhängigkeit vom Aussehen der kristallinen Struktur des Natursteins können die Körner des Granulats 4 eine kantige oder eine mehr abgerundete Struktur aufweisen, wobei letztere z. B. durch Trovalisieren der kantigen Strukturen erhalten werden kann.

Im Bereich ihrer äußeren Oberfläche weist die reparierte Stelle angeschnittene Granulatkörner auf. Diese werden bei der Nachbearbeitung nach der Aushärtung des Füllmaterials 3 durch Abschleifen oder Abhobeln des über die Oberfläche 5 des zu reparierenden Gegenstands 1 überstehenden Materials gebildet. Diese angeschnittenen Granulatkörner simulieren die Kristallstruktur des Natursteins.

### Beispiele:

### Beispielrezeptur für das Füllmaterial:

| | | |
|---|---|---|
| Diurethandimethacrylat CAS 72869-86-4 | | 79,80% |
| Triethylenglykoldimethacrylat CAS 109-16-0 | 20,00% | |
| DL-Campherchinon CAS 10373-78-1 | | 0.20 % |
| | | 100,00% |

### Beispielrezeptur für das Ausgangsmaterial des Granulats:

| | | |
|---|---|---|
| Diurethandimethacrylat CAS 72869-86-4 | | 78,50% |
| Triethylenglykoldimethacrylat CAS 109-16-0 | 20,00% | |
| Titandioxid CAS 13463-67-7 | | 1,00% |
| Benzoylperoxid CAS 94-36-0 | 0.50% | |
| | | 100,00% |

## Patentansprüche

1. Reparaturset zur Reparatur von Beschädigungen (2) in Oberflächen (5) oder an Kanten von Gegenständen (1) aus Naturstein, insbesondere aus Marmor, umfassend ein flüssiges oder pastöses Füllmaterial (3), welches durch Polymerisation, Polyaddition oder Polykondensation aushärtbar ist, und mindestens ein bereits durch Polymerisation, Polyaddition oder Polykondensation ausgehärtetes Granulat (4), wobei das Füllmaterial (3) nach seiner Aushärtung und das Granulat (4) Polymethacrylat und/oder Polyacrylat enthalten und das Füllmaterial (3) mehrfunktionelle Methacrylate und/oder Acrylate enthält und das Granulat (4) aus einem Ausgangsmaterial gebildet wird, welches mehrfunktionelle Methacrylate und/oder Acrylate enthält.

2. Reparaturset nach Anspruch 1, **dadurch gekennzeichnet, dass** das mindestens eine Granulat (4) und das Füllmaterial (3) nach seiner Aushärtung zur gleichen Gruppe von Polymeren, Polyaddukten oder Polykondensaten gehören.

3. Reparaturset nach Anspruch 1 oder Anspruch 2, **dadurch gekennzeichnet, dass** das Füllmaterial (3) nach seiner Aushärtung und das Granulat (4) Polymethacrylat und/oder Polyacrylat mit einem Anteil von zumindest 40 Gew% enthalten.

4. Reparaturset nach einem der Ansprüche 1 bis 3, **dadurch gekennzeichnet, dass** das Reparaturset mindestens zwei von separaten Vorratsbehältern aufgenommenen Granulate (4) mit unterschiedlichen durchschnittlichen Korngrößen umfasst.

5. Reparaturset nach einem der Ansprüche 1 bis 4, **dadurch gekennzeichnet, dass** die durchschnittliche Korngröße des mindestens einen Granulats (4) mindestens 0,05 mm beträgt, vorzugsweise mindestens 0,1 mm beträgt.

6. Reparaturset nach einem der Ansprüche 1 bis 5, **dadurch gekennzeichnet, dass** das Reparaturset Farbzuschlagstoffe zur Beifügung zum Füllmaterial (3) umfasst.

7. Reparaturset nach einem der Ansprüche 1 bis 6, **dadurch gekennzeichnet, dass** das Reparaturset mindestens zwei von separaten Vorratsbehältern aufgenommene Füllmaterialien mit unterschiedlichen Opazitäten und/oder Farben aufweist.

8. Reparaturset nach einem der Ansprüche 1 bis 7, **dadurch gekennzeichnet, dass** das Reparaturset mindestens zwei von separaten Vorratsbehältern aufgenommene Granulate (4) mit unterschiedlichen Opazitäten und/oder Farben umfasst.

9. Reparaturset nach einem der Ansprüche 1 bis 8, **dadurch gekennzeichnet, dass** die Körner des Granulats (4) kantige Strukturen aufweisen

10. Reparaturset nach einem der Ansprüche 1 bis 9, **dadurch gekennzeichnet, dass** das Reparaturset einen von einem separaten Vorratsbehälter aufgenommenen Haftvermittler umfasst.

11. Verfahren zur Reparatur von Beschädigungen (2) in Oberflächen (5) oder an Kanten von Gegenständen (1) aus Naturstein, insbesondere aus Marmor, unter Verwendung eines flüssigen oder pastösen Füllmaterials (3), welches durch Polymerisation, Polyaddition oder Polykondensation aushärtbar ist, und eines bereits durch Polymerisation, Polyaddition oder Polykondensation ausgehärteten Granulat (4), welches in den Bereich der Beschädigung (2) zusätzlich zum Füllmaterial (3) eingebracht wird, wonach das Füllmaterial (3) ausgehärtet wird, wobei das Füllmaterial (3) nach seiner Aushärtung und das Granulat (4) Polymethacrylat und/oder Polyacrylat enthalten und das Füllmaterial (3) mehrfunktionelle Methacrylate und/oder Acrylate enthält und das Granulat (4) aus einem Ausgangsmaterial gebildet wird, welches mehrfunktionelle Methacrylate und/oder Acrylate enthält.

12. Verfahren nach Anspruch 11, **dadurch gekennzeichnet, dass** das Füllmaterial (3) durch Photopolymerisation ausgehärtet wird.

13. Verfahren nach Anspruch 11 oder Anspruch 12, **dadurch gekennzeichnet, dass** nach der Aushärtung des Füllmaterials (3) über die Oberfläche (5) des Gegenstandes (1) überstehendes ausgehärtetes Füllmaterial (3) und Granulat (4) abgeschliffen oder durch einen Schneidvorgang, vorzugsweise Abhobeln, entfernt wird.

14. Verfahren nach Anspruch 13, dass der zu reparierende Bereich in der Folge poliert wird.

15. Verfahren nach einem der Ansprüche 11 bis 14, **dadurch gekennzeichnet, dass** das mindestens eine Granulat (4) und das Füllmaterial (3) nach seiner Aushärtung zur gleichen Gruppe von Polymeren, Polyaddukten oder Polykondensaten gehören.

16. Verfahren nach einem der Ansprüche 11 bis 15, **dadurch gekennzeichnet, dass** bei der Reparatur von Graniten farbige Granulate verwendet werden.

## Claims

1. Repair kit for repairing damage (2) in surfaces (5) or at edges of articles (1) of natural stone, in particular of marble, comprising a liquid or pasty filling material (3) which can be hardened by polymerization, polyaddition or polycondensation, and at least one type of granules (4) already hardened by polymerization, polyaddition or polycondensation, the filling material (3) after its hardening and the granules (4) containing polymethacrylate and/or polyacrylate and the filling material (3) containing polyfunctional methacrylates and/or acrylates and the granules (4) being formed from a starting material which contains polyfunctional methacrylates and/or acrylates.

2. Repair kit according to Claim 1, **characterized in that** at least one type of granule (4) and the filling material (3) after its hardening belong to the same group of polymers, polyadducts or polycondensates.

3. Repair kit according to claim 1 or Claim 2, **characterized in that** the filling material (3) after its hardening and the granules (4) contain polymethacrylate and/or polyacrylate in a proportion of at least 40% by weight.

4. Repair kit according to any of Claims 1 to 3, **characterized in that** the repair kit comprises at least two types of granules (4) held in separate storage containers and having different average particle sizes.

5. Repair kit according to any of Claims 1 to 4, **characterized in that** the average particle size of the at least one type of granules (4) is at least 0.05mm, preferably at least 0.1mm.

6. Repair kit according to any of Claims 1 to 5, **characterized in that** the repair kit comprises colour additives for addition to the filling material (3).

7. Repair kit according to any of Claims 1 to 6, **characterized in that** the repair kit has at least two filling materials held in separate storage containers and having different opacities and/or colours.

8. Repair kit according to any of Claims 1 to 7, **characterized in that** the repair kit comprises at least two types of granules (4) held in separate storage containers and having different opacities and/or colours.

9. Repair kit according to any of Claims 1 to 8, **characterized in that** the particles of the granules (4) have angular structures.

10. Repair kit according to any of Claims 1 to 9, **characterized in that** the repair kit comprises an adhesion promoter held in a separate storage container.

11. Method for repairing damage (2) in surfaces (5) or at edges of articles (1) of natural stone, in particular of marble, using a liquid or pasty filling material (3) which can be hardened by polymerization, polyaddition or polycondensation, and granules (4) which are already hardened by polymerization, polyaddition or polycondensation and which are introduced in addition to the filling material (3) into the region of the damage (2), after which the filling material (3) is hardened, the filling material. (3) after its hardening and the granules (4) containing polymethacrylate and/or polyacrylate and the filling material (3) containing polyfunctional methacrylates and/or acrylates and the granules (4) being formed from a starting material which contains polyfunctional methacrylates and/or acrylates.

12. Method according to Claim 11, **characterized in that** the filling material (3) is hardened by photopolymerization.

13. Method according to Claim 11 or Claim 12, **characterized in that**, after hardening of the filling material (3), hardened filling material (3) and granules (4) projecting above the surface (5) of the article (1) are ground off or are removed by a cutting process, preferably by shaving off.

14. Method according to Claim 13, **characterized in that** the region to be repaired is subsequently polished.

15. Method according to any of Claims 11 to 14, **characterized in that** the at least one type of granules (4) and the filling material (3) after its hardening belong to the same group of polymers, polyadducts or polycondensates.

16. Method according to any of Claims 11 to 15, **characterized in that** coloured granules are used in the repair of granites.

## Revendications

1. Equipement de réparation pour réparer des dommages de deux surface ou d'arêtes d'objets (1) en pierre naturelle, notamment en marbre, comprenant une matière de remplissage liquide ou pâteuse (3), qui durcit par polymérisation, polyaddition ou polycondensation et au moins un granulé (4) qui durcit par polymérisation, polyaddition ou polycondensation, la matière de remplissage (3), après sa prise et le granulé (4) contiennent un polyméthacrylate et/ou un polyacrylate et la matière de remplissage (3) contiennent un méthacrylate et/ ou un acrylate multifonctionnel, et le granulé (4) est constitué d'une matière première contenant des méthacrylates multifonctionnels et/ ou acrylates.

2. Equipement de réparation selon la revendication 1,
**caractérisé en ce qu'**
au moins un granulé (4) et la matière de remplissage (3), après sa prise font partie du même groupe de polymères, de produits de polyaddition ou de produits de polycondensation.

3. Equipement de réparation selon la revendication 1 ou 2,
**caractérisé en ce que**
la matière de remplissage (3), après sa prise, et le granulé (4), contiennent un polyméthacrylate et/ou un polyacrylate selon une teneur d'au moins 70 % en poids.

4. Equipement de réparation selon l'une des revendications 1 à 3,
**caractérisé en ce que**
l'équipement de réparation comprend au moins deux granulés (4) de granulométries, en moyenne différentes, dans deux réservoirs distincts.

5. Equipement de réparation selon l'une des revendications 1 à 4,
**caractérisé en ce que**
la granulométrie moyenne d'au moins un granulé (4) est d'au moins 0,05 mm, de préférence d'au moins 0,1 mm.

6. Equipement de réparation selon l'une des revendications 1 à 5,
**caractérisé en ce qu'**
il comporte des additifs colorants à la matière de remplissage (3).

7. Equipement de réparation selon l'une des revendications 1 à 6,
**caractérisé en ce qu'**
il comporte au moins deux matières de remplissage dans deux réservoirs distincts avec des opacités et/ou des couleurs différentes.

8. Equipement de réparation selon l'une des revendications 1 à 7,
**caractérisé en ce qu'**
il comprend des granulés (4) avec des opacités différentes et/ou des couleurs différentes dans des réservoirs différents.

9. Equipement de réparation selon l'une des revendications 1 à 8,
**caractérisé en ce que**
les grains du granulé (4) ont une structure à arêtes vives.

10. Equipement de réparation selon l'une des revendications 1 à 9,
**caractérisé en ce qu'**
il comporte un agent adhésif dans un résérvoir distinct.

11. Procédé de réparation de dommages (2) à la surface (5) ou aux arêtes d'objets (1) en pierre naturelle notamment en marbre selon lequel on utilise une matière de remplissage (3) liquide ou pâteuse, qui durcit par polymérisation, polyaddition ou polycondensation et un granulé (4) qui durcit par polymérisation, polyaddition ou polycondensation, et que l'on met à l'endroit du dommage (2) en plus de la matière de remplissage (3),
la matière de remplissage (3) durcissant et la matière de remplissage (3) durcit,
la matière de remplissage (3) après durcissement et le granulé (4) contenant des polyméthacrylates et/ou polyacrylates et la matière de remplissage (3) contient des méthacrylates multifonctionnels et/ou des acrylates et
le granulé (4) est constitué par une matière première contenant des méthacrylates multifonctionnels et/ou des acrylates.

12. Procédé selon la revendication 11,
**caractérisé en ce que**
la matière de remplissage (3) est durcie par photo-polymérisation.

13. Procédé selon la revendication 11 ou la revendication 12,
**caractérisé en ce qu'**
après la prise de la matière de remplissage (3), on ponce la matière de remplissage (3) et les granulés (3) durcis, en relief par rapport à la surface (5) de l'objet (1) ou on les enlève par une opération de coupe, notamment par rabotage.

14. Procédé selon la revendication 13,
**caractérisé en ce qu'**
ensuite on effectue le polissage de la zone réparée.

15. Procédé selon l'une des revendications 11 à 14,
**caractérisé en ce qu'**
au moins un granulé (4) et la matière de remplissage (3), après prise, appartiennent au même groupe de polymères, produits de polyaddition ou produits de polycondensation.

16. Procédé selon l'une des revendications 11 à 15,
**caractérisé en ce que**
pour réparer des granites, on utilise des granulés colorés.
